# EUROPEAN PATENT SPECIFICATION

(11) **EP 3 512 229 B1**
(45) Date of publication and mention of the grant of the patent: **14.07.2021**
(21) Application number: 17848014.1
(22) Date of filing: 25.07.2017
(51) Int. Cl.: H04W 12/069, H04W 12/02

(54) **NETWORK ACCESS AUTHENTICATION PROCESSING METHOD AND DEVICE**
NETZWERKZUGRIFFAUTHENTIFIZIERUNGSVERARBEITUNGSVERFAHREN UND -VORRICHTUNG
PROCÉDÉ, SYSTÈME, ET DISPOSITIF D'AUTHENTIFICATION D'ACCÈS AU RÉSEAU

(30) Priority: 12.09.2016 CN 201610821823
(43) Date of publication of application: 17.07.2019
(60) Divisional application: 20199611.3
(73) Proprietor: ZTE Corporation, Shenzhen, Guangdong 518057 (CN)
(72) Inventor: YOU, Shilin, Shenzhen Guangdong 518057 (CN); CAI, Jiyan, Shenzhen Guangdong 518057 (CN); LIANG, Shuang, Shenzhen Guangdong 518057 (CN); PENG, Jin, Shenzhen Guangdong 518057 (CN); LIN, Zhaoji, Shenzhen Guangdong 518057 (CN); ZHAO, Xiaowu, Shenzhen Guangdong 518057 (CN)
(74) Representative: Vossius & Partner Patentanwälte Rechtsanwälte mbB
(86) International application number: PCT/CN2017/094400
(87) International publication number: WO 2018/045841

(56) References cited:
- CN-A- 101 145 906
- CN-A- 103 944 733
- CN-A- 105 050 081
- US-A1- 2016 262 015
- HITEN CHOUDHURY ET AL: "Enhancing User Identity Privacy in LTE", TRUST, SECURITY AND PRIVACY IN COMPUTING AND COMMUNICATIONS (TRUSTCOM), 2012 IEEE 11TH INTERNATIONAL CONFERENCE ON, IEEE, 25 June 2012 (2012-06-25), pages 949-957, XP032233514, DOI: 10.1109/TRUSTCOM.2012.148 ISBN: 978-1-4673-2172-3

## Description

### TECHNICAL FIELD

The present disclosure relates to the field of communications, and more particularly, to a network access authentication processing method and device.

### BACKGROUND

Mobile communication has developed rapidly in more than 20 years, which has brought huge impacts on people's lifestyle and style of work, social politics, economy, and other aspects. Human society has entered an era of efficient information, and the demand for business applications in all aspects has exploded. It will bring huge challenges to the future wireless mobile bandwidth system in terms of frequency, technology and operation.

In addition to providing services for everyone's communication, future mobile network will provide access services for more and more terminals of Internet of Things. Internet of Things access brings new challenges and opportunities to mobile networks. Different types of Internet of Things have different needs for the network. Some require the network to provide high real-time and high-reliability services, such as telemedicine, while others require regular services of small amount of data transmission, such as remote meter reading systems. For different business needs, mobile networks need to be properly optimized to meet business needs. More and more different optimization requirements are proposed for the mobile networks by more and more Internet of Things, some of them may be contradictory. Therefore, a converged core network is increasingly unable to meet the demands of various Internet of Things.

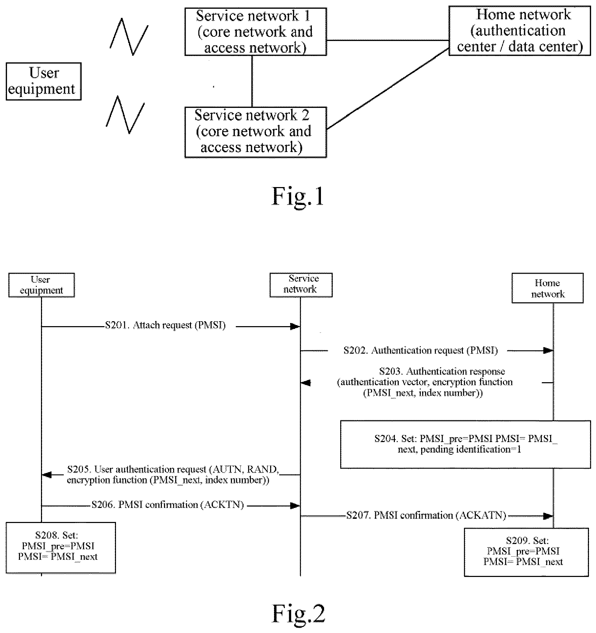

With the continuous upgrading of the network and the emergence of 5G technology, the privacy protection requirements for the network are exigent. Fig. 1 is a schematic diagram of accessing the future 5G network in the related art. As shown in Fig. 1, the user equipment completes initial registration in the service network 1, and the service network 1 obtains an authentication certification vector and user subscription data from the home network of the user equipment, and the service network 1 completes mutual authentication with the user equipment, and then the user equipment may attach to the service network 2 and then perform related data services. The service network 1 and the service network 2 both include an access network and a core network, and the home network includes a user data center/authentication certification center.

Fig. 2 is a schematic diagram of a flow that user equipment accesses a service network with an International Mobile Subscriber Identification Number (IMSI) to protect the user's privacy, in which the IMSI of the user, the initial Privacy enhanced Mobile Subscriber Identifier (PMSI) and the corresponding Kpmsi are saved in both the user equipment and the home network, and both IMSI and PMSI have the same Mobile Country Code (MCC) and Mobile Network Code (MNC).

In S201, the user equipment initiates an attach request message which carries a PMSI.

In S202, the service network queries the corresponding home network according to the MCC and MNC of the PMSI, and then sends an authentication certification request message which carries the PMSI to the home network.

In S203, the home network finds the corresponding IMSI according to the PMSI, generates a corresponding security vector, and then generates a next attached PMSI_next, where the PMSI_next=MCC|MNC| intercept function (hash function (Kpmsi, PMSI), *n*), Kpmsi is a hash key, and *n* is an interception length. Since PMSI_next may be the same as a PMSI of other user equipment, a hash number is added as the index number, the index number is counted from 0, and an authentication certification response message is sent to the service network. The authentication certification response message carries a security vector and an encrypted PMSI_next, where the encrypted PMSI_next=encryption function (PMSI_next|index number, K1), K1 is the encryption key K1 for encrypting the PMSI_next by the home network, K1=key derivation function (Kpmsi, RAND), and RAND is a random number in the authentication vector.

In S204, the home network device sets: PMSI_pre=PMSI, PMSI= PMSI_next, and pending identification=1, wherein pending identification=1 means the PMSI is invalid while the PMSI_pre is valid at current.

In S205, the service network sends to the user equipment a user authentication request message, where the message carries an authentication token (AUTN) in the authentication vector, which is used to authenticate the network by the user equipment, and the message also carries a random number RAND and an encrypted PMSI_next.

In S206, after the user equipment succeeds in AUTN authentication, it acquires K1 in the same way as the home network does, decrypts the encrypted PMSI_next, and calculates the PMSI_next using the K2 signature, the signature token ACKTN=signature function (PMSI_next | index number, K2), where K2=key generating function (Kpmsi, signature authentication K), the signature authentication K is also stored in the user equipment and in the home network individually, and the user equipment sends a PMSI confirmation message carrying ACKTN to the service network.

In S207, the service network forwards the PMSI confirmation message carrying ACKTN to the home network.

In S208, the user equipment device sets: PMSI_pre=PMSI, PMSI= PMSI_next, and the user equipment registers with PMSI if it needs to register with PMSI next time.

In S209, the home network uses the same calculation method as the user equipment does to verify the validity of the ACKTN signature token, and sets PMSI_pre=PMSI, PMSI= PMSI_next, pending identification=0, where pending identification=0 means the PMSI is valid.

However, the network access process in the related art does not provide a processing method for the home network to deal with failure of ACKTN signature authentication.

This section provides background information related to the present disclosure which is not necessarily prior art.

HITEN CHOUDHURY ET AL, "Enhancing User Identity Privacy in LTE", Trust, Security and Privacy in computing and communications (TRUSTCOM), 2012 IEEE 11TH INTERNATIONAL CONFERENCE ON, IEEE, (20120625), ISBN 978-1-4673-2172-3, pages 949 - 957, XP032233514 relates to identity privacy in LTE. In particular, it relates to the security architecture of LTE and how this architecture deals with identity privacy and the user identity privacy in LTE.

US 2016/262015 A1 relates to systems and techniques to protect a user equipment's international mobile subscriber identity by providing a privacy mobile subscriber identity instead. In an attach attempt to a serving network, the UE provides the PMSI instead of IMSI, protecting the IMSI from exposure.

### SUMMARY

The embodiments of the present disclosure provides a network access authentication processing method and device to at least solve the problem that a network access process in the related art does not provide a processing method for the home network to deal with failure of signature authentication.

The invention is defined by the appended claims.

### BRIEF DESCRIPTION OF THE DRAWINGS

The accompanying drawings illustrated here serve to provide a further understanding of the present disclosure and constitute a part of the application, and the illustrative embodiments of the present disclosure together with the description thereof serve to explain the present disclosure, but do not constitute inappropriate definition to the present disclosure. In the drawings:
Fig. 1 is a schematic diagram of accessing the future 5G network in the related art;
Fig. 2 is a schematic diagram of a flow that user equipment accesses a service network with an International Mobile Subscriber Identification Number (IMSI)to protect the user's privacy;
Fig. 3 is a hardware structure diagram of a computer terminal adopting the network access authentication processing method according to the embodiments of the present disclosure;
Fig. 4 is a flow chart of the network access authentication processing method according to the embodiments of the present disclosure;
Fig. 5 is a schematic diagram of a flow of an International Mobile Subscriber Identification Number for protecting the user's privacy and a schematic diagram of a flow of processing failure of signature authentication according to the embodiments of the present disclosure;
Fig. 6 is a schematic diagram of a flow of an International Mobile Subscriber Identification Number for protecting the user's privacy and processing failure of signature authentication according to the embodiments of the present disclosure;
Fig. 7 is a structural diagram of the network access authentication processing device according to the embodiments of the present disclosure;
Fig. 8 is a preferred structural diagram of the network access authentication processing device according to the embodiments of the present disclosure; and
Fig. 9 is a preferred structural diagram of the network access authentication processing device according to the embodiments of the present disclosure.

### DETAILED DESCRIPTION

The present disclosure will be explained in detail with reference to the accompanying drawings and embodiments hereinafter. It should be noted that, in case of no conflict, the embodiments in the present application and the features in the embodiments may be combined with each other.

It should be noted that the terms "first", "second" and the like in the description and claims of the present disclosure as well as the above drawings are used to distinguish similar objects, and are not necessarily used to describe a specific sequence or a chronological order.

### First embodiment

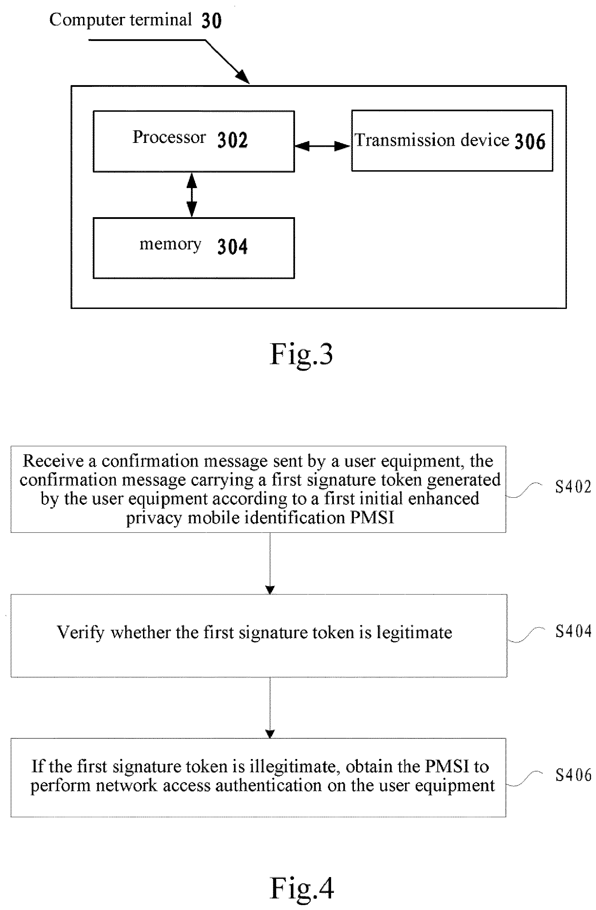

The method embodiment provided by the first embodiment of the present disclosure may be executed in a computer terminal or some arithmetical device like that. Taking running on a computer terminal for an example, Fig. 3 is a hardware structural diagram of a computer terminal implementing the network access authentication processing method according to the embodiments of the present disclosure. As shown in Fig. 3, the computer terminal 30 may include one or more (only one is shown in Fig. 3) processor 302, which may include, but is not limited to, a microprocessor (MPU), a field programmable gate array (FPGA) or other processing units, a memory 304 for storing data, and a transmission device 306 for communication. It is understandable for those skilled in the art that the structure shown in Fig. 3 is only illustrative, and do not constitute definition to the structure of the above electronic devices. For instance, the computer terminal 30 may include more or less components than those illustrated in Fig. 3, or has different configurations from those illustrated in Fig. 3.

The memory 304 may be used to store software programs and modules of the application software, such as the program instructions/modules corresponding to the network authentication processing method in the embodiments of the present disclosure, and the processor 302 performs various functional applications and data processing, that is, implements the above method, by running the software programs and modules stored in the memory 304. The memory 304 may include a high-speed random access memory and also a non-volatile memory, such as one or more magnetic storage devices, a flash memory, or other non-volatile solid state memory. In some examples, the memory 304 may further include memories remotely located relative to the processor 302, and these remote memories may be connected to the computer terminal 30 via a network. Examples of such network include, but are not limited to, the Internet, intranet, local area network, mobile communication network, and combinations thereof.

The transmission device 306 is arranged to receive or transmit data via a network. A specific example of the above network may include a wireless network provided by a communication provider of the mobile terminal 30. In one example, the transmission device 306 includes a Network Interface Controller (NIC) that may be connected to other network devices through a base station to communicate with the Internet. In one example, the transmission device 306 may be a Radio Frequency (RF) module for communicating with the Internet wirelessly.

The present embodiment provides a network access authentication processing method running on the above computer terminal. Fig. 4 is a flow chart of the network access authentication processing method according to the embodiment of the present disclosure. As shown in Fig.4, the flow includes the steps as follows.

In S402, a confirmation message sent by user equipment is received, the confirmation message carrying a first signature token generated by the user equipment according to a first Privacy enhanced Mobile Subscriber Identifier (PMSI).

In S404, it is verified whether the first signature token is valid.

In S406, if it is verified that the first signature token is invalid, the PMSI is obtained to perform network access authentication on the user equipment.

Through the above steps, the PMSI is obtained to perform network access authentication on the user equipment under the circumstance that the first signature token is invalid, that is, the signature authentication is failed, thereby the problem that the network access process in the related art does not provide a processing method for the home network to deal with failure of signature authentication can be solved.

In the embodiments of the present disclosure, obtaining the PMSI to perform network access authentication on the user equipment includes: sending a message of first signature token failed authentication to the user equipment, and notifying the user equipment to re-initiate an attach request; and re-obtaining the first PMSI according to the attach request to perform network access authentication on the user equipment. For example, after the signature token ACKTN authentication is failed, the home network sends a message of the failure of ACKTN authentication to the user equipment via a service network, and the user equipment uses the original PMSI to perform a re-attach process.

In the embodiments of the present disclosure, obtaining the PMSI to perform network access authentication on the user equipment includes: generating a second PMSI according to the first PMSI and sending the second PMSI to the user equipment; based on a feedback from the user equipment, obtaining a second signature token generated by the user equipment according to the second PMSI; and re-performing network access authentication process on the user equipment via verifying whether the second signature token is valid.

In the embodiments of the present disclosure, re-performing network access authentication process on the user equipment via verifying whether the second signature token is valid includes: verifying whether the second signature token is valid; if it is verified that the second signature token is invalid, sending a message of second signature token failed authentication to the user equipment and a service network to notify the user equipment that the second signature token is invalid; and if it is verified that the second signature token is valid, performing an attach processing on the user equipment using the second PMSI instead of the first PMSI.

For example, when failing to authenticate the signature token ACKTN, the home network generates a PMSI_next_new and sends the PMSI_next_new to the user equipment for signature authentication once more to get an ACKTN_new. Once the home network succeeds in authenticating the ACKTN_new, it will set the PMSI to be PMSI_next_new, while the user equipment will also set the PMSI to be PMSI_next_new. If the authentication is failed, the home network will send the message that the re-authentication of ACKTN is failed to the user equipment and the service network, and the service network and the home network will consider the user equipment as an invalid user and will reject the attach request re-sent by the user equipment; and the user equipment will consider the home network to be invalid and not initiate an attach request again.

In the embodiments of the present disclosure, before receiving the confirmation message sent by the user equipment, the method further includes: receiving an attach request sent by the user equipment, the attach request carrying a first PMSI which includes a user data center identification; generating an encrypted first PMSI by a user data center corresponding to the user data center identification; and sending the encrypted first PMSI to the user equipment, the encrypted first PMSI being used to generate the first signature token. Through the steps described above, the corresponding user data center can be found according to the user data center identification, and the problem that the home network can't find the corresponding user data center when the PMSI identification is attached in case that there are a plurality of user data centers can be solved.

In the embodiments of the present disclosure, before receiving the confirmation message sent by the user equipment, the method further includes: obtaining the PMSI by means of hashing an International Mobile Subscriber Identification number (IMSI) using a hash function. Through the steps described above, the loss of PMSI is avoided when failures happen in the home network, making the home network work properly.

In the embodiments of the present disclosure, receiving the confirmation message sent by the user equipment includes: receiving a location update request sent by a service network, the location update request carrying the first signature token forwarded to the service network by the user equipment. For example, the user equipment obtains the PMSI_next from the user authentication message, performs a signature operation on the PMSI_next to obtain a signature token ACKTN, and returns a user authentication response message to the service network, the message carrying a signature token ACKTN, and the service network sends a location update request to the home network, the message carrying a signature authentication token ACKTN, and the home network authenticates whether the ACKTN is valid and confirm the validity of the PMSI_next, completes the attach request message to the user equipment through the service network, and then the user equipment determines the validity of the PMSI_next, and replaces the original PMSI with the PMSI_next. Through the steps described above, the first signature token can still be received when the confirmation message carrying the first signature token cannot be received, and it is guaranteed that the PMSIs of the user equipment and the home network are out of synchronization.

In order to facilitate understanding of the embodiments described above, the following detailed explanations are given.

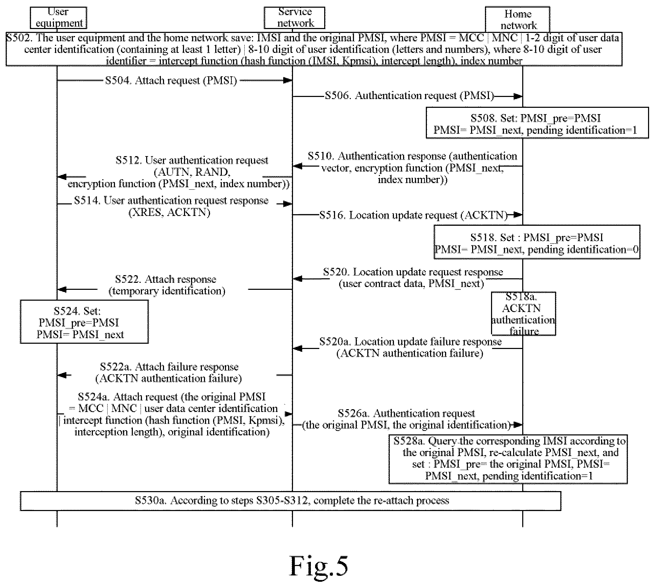

Fig. 5 is a schematic diagram of a flow of an International Mobile Subscriber Identification Number for protecting the user's privacy and a schematic diagram of a flow of processing failure of signature authentication according to the embodiments of the present disclosure. As shown in Fig. 5, the flow includes the following steps.

In S502, the user equipment and the home network maintain: IMSI and the original PMSI, where the original PMSI = MCC | MNC | 1-2 digit of user data center identification (containing at least 1 letter) | 8-10 digit of user identification (letters and numbers), where 8-10 digit of user identifier = intercept function (hash function (IMSI, Kpmsi), intercept length), where the intercept length is 8-10.

In S504, the user equipment sends an original attach request message carrying PMSI to the service network 1.

In S506, the service network queries the corresponding home network according to the MCC and the MNC of the PMSI, and queries the user data center corresponding to the home network according to the user data center identification, and sends a message of authentication request carrying the PMSI to the home network user data center.

In S508, the home network user data center finds the corresponding IMSI according to the PMSI, generates a corresponding security vector, and then generates a next attached PMSI_next, where the PMSI_next=MCC|MNC| user data center identification| intercept function (hash function (Kpmsi, PMSI), n), where Kpmsi is a hash key, and *n* is the interception length. Since PMSI_next may be the same as a PMSI of other user equipment, the hash number is added as the index number, the index number is counted from 0, and it is set that: PMSI_pre=PMSI, PMSI=PMSI_next, pending identification=1, where pending identification=1 means the PMSI is invalid while the PMSI_pre is valid currently.

In S510, the home network user data center sends an authentication response message to the service network, the message carrying a security vector and an encrypted PMSI_next, where the encrypted PMSI_next=encryption function (PMSI_next|index number, K1), K1 is the encryption key K1 (K1=key derivation function (Kpmsi, RAND)) for encrypting the PMSI_next by the home network, and RAND is a random number in the authentication vector.

In S512, the service network sends a user authentication request message to the user equipment, the message carrying an authentication token (AUTN) in the authentication vector for the user equipment to authenticate the network, and the message also carrying a random number RAND and an encrypted PMSI_next.

In S514, after the user equipment succeeds in AUTN authentication, it acquires K1 in the same way as the home network does, decrypts the encrypted PMSI_next, and calculates the PMSI_next using the K2 signature, the signature token ACKTN=signature function (PMSI_next | index number, K2), where K2=key generating function (Kpmsi, signature authentication K), where the signature authentication K is also stored in the user equipment and in the home network individually, and the user equipment sends a user authentication succeed response message carrying ACKTN and XRES to the service network.

In S516, the service network compares the received XRES with the XRES in the security vector; if the two XRESs are equal, the authentication of the user equipment succeeds, and the service network sends a message of location update request carrying ACKTN to the home network.

In S518, the home network uses the same calculation method as the user equipment does to verify the validity of the ACKTN signature token, and it is set that PMSI_pre=PMSI, PMSI= PMSI_next, pending identification=0, where pending identification=0 means the PMSI is valid.

In S520, the home network returns a response message of the location update to the service network, the message carrying user contract data and the PMSI_next.

In S522, the service network saves the user contract data and the PMSI_next and returns an attach response succeed message to the user equipment.

In S524, the user equipment device sets: PMSI_pre=PMSI, PMSI= PMSI_next, and the user equipment registers with PMSI if it needs to register with PMSI next time.

The above is a process in which the user equipment uses the PMSI to successfully attach, and the following is a process in the case that the signature authentication ACKTN of the home network fails.

In S518a, authentication ACKTN of the home network fails.

In S520a, the home network returns a response message of the location update failure to the service network, the message carrying a reason value of the ACKTN authentication failure.

In S522a, the home network returns a response message of the attach failure to the user equipment, the message carrying a reason value of the ACKTN authentication failure.

In S524a, the user equipment obtains the original PMSI according to the reason value of the ACKTN authentication failure, or re-calculate the original PMSI, where the original PMSI = MCC | MNC | user data center identification | 8-10 digit of user identification | intercept function (hash function (Kpmsi, PMSI), interception length), and the user equipment initiates an attach message to the service network, the message carrying the original PMSI and the original identification.

In S526a, the service network queries the corresponding home network according to the MCC and MNC of the original PMSI, queries the user data center corresponding to the home network according to the user data center identification, and sends an authentication request message to the home network user data center, the message carrying the original PMSI and the original identification.

In S528a, the home network user data center finds the corresponding IMSI according to the original identification and the original PMSI, generates a corresponding security vector, and re-calculates an attached PMSI_next, where the PMSI_next=MCC|MNC| user data center identification| intercept function (hash function (Kpmsi, PMSI), n), where Kpmsi is a hash key, and *n* is the interception length. Since PMSI_next may be the same as a PMSI of other user equipment, the hash number is added as the index number, the index number is counted from 0, and it is set: PMSI_pre=original PMSI, PMSI=PMSI_next, pending identification=1, where pending identification=1 means the PMSI is invalid while the PMSI_pre is valid for the moment.

In S530a, the re-attach process is completed according to steps S505-S512, in step S512, PMSI_pre=the original PMSI while other descriptions are the same.

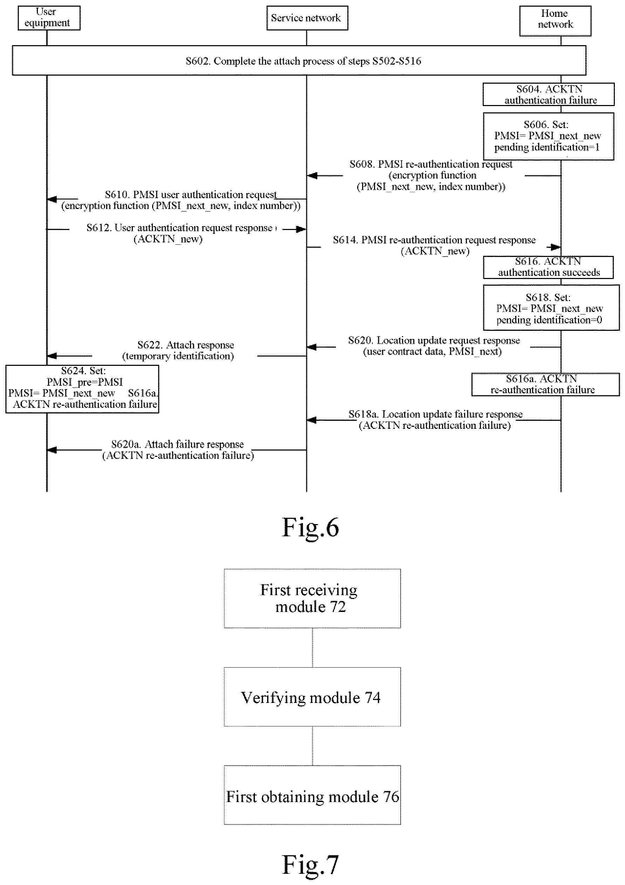

Fig. 6 is a schematic diagram of a flow of an International Mobile Subscriber Identification Number for protecting the user's privacy and processing failure of signature authentication according to the embodiments of the present disclosure. As shown in Fig. 6, the flow includes the following steps.

In S602, the attach process is performed according to steps S502-S516.

In S604, the authentication ACKTN of the home network fails.

In S606, a new PMSI_next_new is generated, where the PMSI_next_new=MCC|MNC| user data center identification| intercept function (hash function (Kpmsi, PMSI), n), with settings: PMSI=PMSI_next_new, pending identification=1, where pending identification=1 means the PMSI is invalid while the PMSI_pre is valid at present.

In S608, the home network sends a message of PMSI re-authentication request to the service network, the message carrying an encrypted PMSI_next_new, where the encrypted PMSI_next=encryption function (PMSI_next_new|index number, K1), where K1 is the encryption key K1 (K1=key derivation function (Kpmsi, RAND)) to the PMSI_next encrypted by the home network, where RAND is a random number in the authentication vector.

In S610, the service network sends a message of PMSI user re-authentication request to the user equipment, the message carrying an encrypted PMSI_next_new.

In S612, the user equipment acquires K1 in the same way as the home network, decrypts the encrypted PMSI_next_new, and calculates the PMSI_next_new using the K2 signature, the signature token ACKTN=signature function (PMSI_next_new | index number, K2), where K2=key generating function (Kpmsi, signature authentication K), where the signature authentication K is also stored in the user equipment and in the home network individually, and the user equipment sends a PMSI user re-authentication response message carrying ACKTN_new to the service network.

In S614, the service network returns a response message of the PMSI re-authentication request to the home network, the message carrying the ACKTN_new.

In S616, the home network uses the same calculation method as the user equipment to verify the validity of the ACKTN signature token.

In S618, the home network sets: PMSI=PMSI_next_new, pending identification=0, where pending identification=0 means the PMSI is valid.

In S620, the home network returns a response message of the location update to the service network, the message carrying user contract data and the PMSI_next_new.

In S622, the service network saves the user contract data and the PMSI_next_new, and returns an attach response succeed message to the user equipment.

In S624, the user equipment sets: PMSI_pre=PMSI, PMSI= PMSI_next_new, and the user equipment registers with PMSI if it needs to register with PMSI next time.

The above is a process in which the ACKTN_new signature is authenticated as valid, and the following is a process in which the home network signature authentication ACKTN_new fails.

In S616a, the authentication ACKTN_new of the home network fails.

In S618a, the home network returns a response message of the location update failure to the service network, the message carrying the value of the reason for the ACKTN re-authentication failure.

In S620a, the service network returns a response message of the attach failure to the user equipment, the message carrying the value of the reason for the ACKTN re-authentication failure, and the user equipment determines that the home network is an illegal network and does not register any more, while the service network and the home network determine that the user equipment is an illegal user and reject all non-emergency service requests.

Through the description of the above embodiments, those skilled in the art can clearly understand that the method according to the foregoing embodiment can be implemented by means of software with a necessary general hardware platform, and can also be implemented by means of hardware, but in many cases the former is a better implementation. Based on such understanding, the technical solution in essence or the portion contributing to the related art of the embodiments of the present disclosure may be embodied in the form of a software product, which is stored in a storage medium, such as a Read-Only Memory (ROM)/Random Access Memory (RAM), a magnetic disc and an optical disc, the storage medium includes a plurality of instructions for enabling a terminal device (may be a mobile phone, a computer, a server, or a network device, etc.,) to perform the methods described in various embodiments of the present disclosure.

### Second embodiment

The present embodiment provides a network access authentication processing device, which is used to implement the above embodiments and preferred embodiments, and the description which has been given will be omitted. As used below, the term "module" may implement a combination of software and/or hardware of a predetermined function. Although the devices described in the following embodiments are preferably implemented in software, hardware or a combination of software and hardware is also possible and contemplated.

Fig. 7 is a structure diagram of the network access authentication processing device according to the embodiments of the present disclosure; as shown in Fig. 7, the device includes: a first receiving module 72, a verifying module 74, and a first obtaining module 76.

The first receiving module 72 is configured to receive a confirmation message sent by user equipment, the confirmation message carrying a first signature token generated by the user equipment according to a first privacy enhanced mobile subscriber identifier (PMSI).

The verifying module 74 is connected to the first receiving module 72, and is configured to verify whether the first signature token is valid.

The first obtaining module 76 is connected to the first receiving module 72, and is configured to obtain a PMSI to perform network access authentication on the user equipment if it is verified that the first signature token is invalid.

In the embodiments of the present disclosure, the first obtaining module is further configured to send a message of first signature token failed authentication to the user equipment, and notify the user equipment to re-initiate an attach request; and re-obtain the first PMSI based on the attach request to perform network access authentication on the user equipment.

In the embodiments of the present disclosure, the first obtaining module is further configured to generate a second PMSI according to the first PMSI and send the second PMSI to the user equipment; based on a feedback from the user equipment, obtain a second signature token generated by the user equipment according to the second PMSI; and re-perform network access authentication on the user equipment via verifying whether the second signature token is valid.

In the embodiments of the present disclosure, the first obtaining module is further configured to verify whether the second signature token is valid; if the second signature token is invalid, send a message of the second signature token failed authentication to the user equipment and a service network, and notify the user equipment that the second signature token is invalid; and if the second signature token is valid, perform attach processing on the user equipment using the second PMSI instead of the first PMSI.

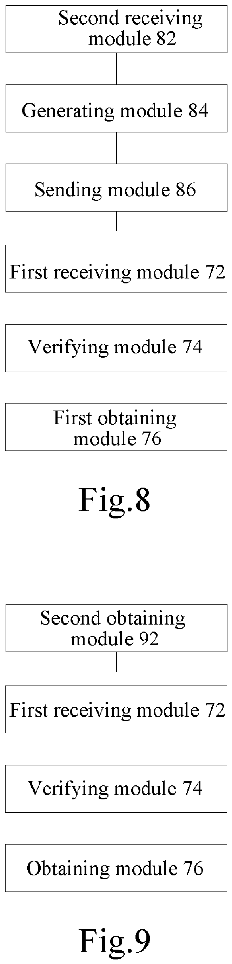

Fig. 8 is a preferred structure diagram of the network access authentication processing device according to the embodiments of the present disclosure; as shown in Fig. 8, in addition to all the modules shown in Fig. 7, the device also includes:
a second receiving module 82, configured to receive an attach request sent by the user equipment, the attach request carrying a first PMSI which includes a user data center identification;
a generating module 84, connected to the second receiving module 82, and configured to generate an encrypted first PMSI by the user data center corresponding to the user data center identification; and
a sending module 86, connected to the generating module 84, and configured to send the encrypted first PMSI to the user equipment, the encrypted first PMSI being used to generate the first signature token.

Fig. 9 is a preferred structure diagram of the network access authentication processing device according to the embodiments of the present disclosure; as shown in Fig. 8, in addition to all the modules shown in Fig. 7 and Fig. 8, the device also includes:
a second obtaining module 92, configured to obtain the PMSI by means of hashing an international mobile subscriber identification number (IMSI) using hash function.

In the embodiments of the present disclosure, the first receiving module is further configured to receive location update request sent by a service network, the location update request carrying the first signature token forwarded to the service network by the user equipment.

It should be noted that each of the above modules may be implemented by software or hardware. For the latter, the foregoing may be implemented by, but not limited to, the following way: the foregoing modules are all set in the same processor; or, the above modules are set in different processors in the form of any combination.

### Third embodiment

In the embodiments of the present disclosure, there is provided a storage medium. In the present embodiment, the storage medium is configured to store the program code which executes the following steps:
S1, receiving a confirmation message sent by user equipment, the confirmation message carrying a first signature token generated by the user equipment according to a first privacy enhanced mobile subscriber identifier (PMSI);
S2, verifying whether the first signature token is valid; and
S3, if the first signature token is invalid, obtaining a PMSI to perform network access authentication on the user equipment.

In the embodiments of the present disclosure, the storage medium is further configured to store the program code which executes the following steps: obtaining the PMSI to perform network access authentication on the user equipment includes:
S1, sending a message of a first signature token failed authentication to the user equipment, and notifying the user equipment to re-initiate an attach request; and
S2, re-obtaining the first PMSI according to the attach request to perform network access authentication on the user equipment.

In the embodiments of the present disclosure, the storage medium is further configured to store the program code which executes the following steps: obtaining the PMSI to perform network access authentication on the user equipment includes:
S1, generating a second PMSI according to the first PMSI and sending the second PMSI to the user equipment;
S2, based on a feedback from the user equipment, obtaining a second signature token generated by the user equipment according to the second PMSI; and
S3, re-performing network access authentication on the user equipment via verifying whether the second signature token is valid.

In the embodiments of the present disclosure, the storage medium is further configured to store the program code which executes the following steps: re-performing network access authentication on the user equipment via verifying whether the second signature token is valid includes:
S1, verifying whether the second signature token is valid;
S2, if the second signature token is invalid, sending a message of the second signature token failed authentication to the user equipment and a service network, and notifying the user equipment that the second signature token is invalid; and
S3, if the second signature token is valid, performing attach processing on the user equipment using the second PMSI instead of the first PMSI.

In the embodiments of the present disclosure, the storage medium is further configured to store the program code which executes the following steps: before receiving the confirmation message sent by the user equipment, further including:
S1, receiving an attach request sent by the user equipment, the attach request carrying a first PMSI which includes a user data center identification;
S2, generating an encrypted first PMSI by the user data center corresponding to the user data center identification; and
S3, sending the encrypted first PMSI to the user equipment, the encrypted first PMSI being used to generate the first signature token.

In the embodiments of the present disclosure, the storage medium is further configured to store the program code which executes the following steps: before receiving the confirmation message sent by the user equipment, further including:
S1, obtaining the PMSI by means of hashing an international mobile subscriber identification number (IMSI) using hash function.

In the embodiments of the present disclosure, the storage medium is further configured to store the program code which executes the following steps: receiving a confirmation message sent by a user equipment, including:
S1, receiving location update request sent by a service network, wherein the location update request carrying the first signature token forwarded to the service network by the user equipment.

Optionally, in the present embodiment, the storage medium may include, but is not limited to, a U Disk, a ROM/RAM, a mobile hard disk drive, a magnetic disc, an optical disc or other mediums that can store program codes.

Optionally, in the present embodiment, according to the stored program codes in the storage medium, the processor executes: receiving a confirmation message sent by a user equipment, the confirmation message carrying a first signature token generated by the user equipment according to a first privacy enhanced mobile subscriber identifier (PMSI); verifying whether the first signature token is valid; and if the first signature token is invalid, obtaining a PMSI to perform network access authentication on the user equipment.

Optionally, in the present embodiment, according to the stored program codes in the storage medium, the processor executes: obtaining the PMSI to perform network access authentication on the user equipment includes: sending a message of a first signature token failed authentication to the user equipment, and notifying the user equipment to re-initiate an attach request; and re-obtaining the first PMSI according to the attach request to perform network access authentication on the user equipment.

Optionally, in the present embodiment, according to the stored program codes in the storage medium, the processor executes: obtaining the PMSI to perform network access authentication on the user equipment includes: generating a second PMSI according to the first PMSI and sending the second PMSI to the user equipment; based on the user equipment feedback, obtaining a second signature token generated by the user equipment according to the second PMSI; and re-performing network access authentication on the user equipment via verifying whether the second signature token is valid.

Optionally, in the present embodiment, according to the stored program codes in the storage medium, the processor executes: re-performing network access authentication on the user equipment via verifying whether the second signature token is valid incudes: verifying whether the second signature token is valid; if the second signature token is invalid, sending a message of the second signature token failed authentication to the user equipment and a service network, and notifying the user equipment that the second signature token is invalid; and if the second signature token is valid, performing attach processing on the user equipment using the second PMSI instead of the first PMSI.

Optionally, in the present embodiment, according to the stored program codes in the storage medium, the processor executes: before receiving the confirmation message sent by the user equipment, further including: receiving an attach request sent by the user equipment, the attach request carrying a first PMSI which includes a user data center identification; generating an encrypted first PMSI by the user data center corresponding to the user data center identification; and sending the encrypted first PMSI to the user equipment, the encrypted first PMSI being used to generate the first signature token.

Optionally, in the present embodiment, according to the stored program codes in the storage medium, the processor executes: before receiving a confirmation message sent by a user equipment, including: obtaining the PMSI by means of hashing an international mobile subscriber identification number (IMSI) using hash function.

Optionally, in the present embodiment, according to the stored program codes in the storage medium, the processor executes: receiving a confirmation message sent by a user equipment, including: receiving location update request sent by a service network, the location update request carrying the first signature token forwarded to the service network by the user equipment.

Optionally, the specific examples in the present embodiment may refer to the examples described in the foregoing embodiments and the optional embodiments, and details are omitted herein.

It will be apparent to those skilled in the art that the modules or steps of the above-described embodiments of the present disclosure may be implemented by a general computing device, which may be centralized on a single computing device or distributed across the network of multiple computing devices, and in the embodiments of the present invention, they may be implemented by program codes executable by the computing device, such that they may be stored in the storage device and executed by the computing device, and in some cases, the steps shown or described may be performed in a different order from that herein, or they may be separately fabricated into individual integrated circuit modules, or a plurality of the modules or steps may be implemented as a single integrated circuit module. Thus, the embodiments of the invention are not limited to any specific combination of hardware or software.

## Claims

1. A network access authentication processing method, comprising:
receiving (S402), by a first receiving module (72), a confirmation message sent by user equipment, the confirmation message carrying a first signature token generated by the user equipment according to a first Privacy enhanced Mobile Subscriber Identifier, PMSI;
verifying (S404), by a verifying module (74), whether the first signature token is valid; and
obtaining (S406), by a first obtaining module (76), when the first signature token is invalid, the first PMSI or a second PMSI generated according to the first PMSI, to perform network access authentication on the user equipment.

2. The method according to claim 1, wherein obtaining (S406) the first PMSI or a second PMSI generated according to the first PMSI, to perform the network access authentication on the user equipment comprises:
sending a message of first signature token failed authentication to the user equipment, and notifying the user equipment to re-initiate an attach request; and
re-obtaining the first PMSI based on the attach request to perform the network access authentication on the user equipment.

3. The method according to claim 1, wherein obtaining (S406) the first PMSI or a second PMSI generated according to the first PMSI, to perform the network access authentication on the user equipment comprises:
generating the second PMSI according to the first PMSI and sending the second PMSI to the user equipment;
based on a feedback from the user equipment, obtaining a second signature token generated by the user equipment according to the second PMSI; and
re-performing the network access authentication on the user equipment via verifying whether the second signature token is valid.

4. The method according to claim 3, wherein re-performing the network access authentication on the user equipment via verifying whether the second signature token is valid comprises:
verifying whether the second signature token is valid;
if the second signature token is invalid, sending a message of second signature token failed authentication to the user equipment and a service network, and notifying the user equipment that the second signature token is invalid; and
if the second signature token is valid, performing attach processing on the user equipment using the second PMSI instead of the first PMSI.

5. The method according to claim 1, wherein before receiving (S402) the confirmation message sent by the user equipment, the method further comprises:
receiving an attach request sent by the user equipment, the attach request carrying the first PMSI and the first PMSI comprising a user data center identification;
generating an encrypted first PMSI by a user data center corresponding to the user data center identification; and
sending the encrypted first PMSI to the user equipment, wherein the encrypted first PMSI is used to generate the first signature token.

6. The method according to claim 1, wherein before receiving (S402) the confirmation message sent by the user equipment, the method further comprises:
obtaining, by a second obtaining module (92), the first PMSI by means of hashing an International Mobile Subscriber Identification number (IMSI) using a hash function.

7. The method according to any one of claims 1 to 6, wherein receiving (S402) the confirmation message sent by the user equipment, comprises:
receiving a location update request sent by a service network, the location update request carrying the first signature token forwarded to the service network by the user equipment.

8. A network access authentication processing device, comprising:
a first receiving module (72) configured to receive a confirmation message sent by user equipment, the confirmation message carrying a first signature token generated by the user equipment according to a first Privacy enhanced Mobile Subscriber Identifier, PMSI;
a verifying module (74) configured to verify whether the first signature token is valid; and
a first obtaining module (76) configured to, when the first signature token is invalid, obtain the first PMSI or a second PMSI generated according to the first PMSI, to perform network access authentication on the user equipment.

9. The device according to claim 8, wherein the first obtaining module (76) is further configured to send a message of first signature token failed authentication to the user equipment, and notify the user equipment to re-initiate an attach request; and re-obtain the first PMSI based on the attach request to perform the network access authentication on the user equipment.

10. The device according to claim 8, wherein the first obtaining module (76) is further configured to generate the second PMSI according to the first PMSI and send the second PMSI to the user equipment; based on a feedback from the user equipment, obtain a second signature token generated by the user equipment according to the second PMSI; and re-perform the network access authentication on the user equipment via verifying whether the second signature token is valid.

11. The device according to claim 10, wherein the first obtaining module (76) is further configured to verify whether the second signature token is valid; if the second signature token is invalid, send a message of second signature token failed authentication to the user equipment and a service network, and notify the user equipment that the second signature token is invalid; and if the second signature token is valid, perform attach processing on the user equipment using the second PMSI instead of the first PMSI.

12. The device according to claim 8, further comprising:
a second receiving module (82) configured to receive an attach request sent by the user equipment, the attach request carrying the first PMSI and the first PMSI comprising a user data center identification, the user data center identification corresponding to a user data center, the user data center including a generating module (84) configured to generate an encrypted first PMSI; and
a sending module (86) configured to send the encrypted first PMSI to the user equipment, wherein the encrypted first PMSI is used to generate the first signature token.

13. The device according to claim 8, further comprising:
a second obtaining module (92) configured to obtain the first PMSI by means of hashing an International Mobile Subscriber Identification number (IMSI) using a hash function.

14. The device according to any one of claims 8 to 13, wherein the first receiving module (72) is further configured to receive a location update request sent by a service network, the location update request carrying the first signature token forwarded to the service network by the user equipment.

15. A storage medium, comprising a stored program, wherein the program executes the method according to any one of claims 1 to 7 during running on a computer.

## Patentansprüche

1. Netzwerkzugriff-Authentifizierungsverarbeitungsverfahren, das aufweist:
Empfangen (S402) durch ein erstes Empfangsmodul (72) einer von einem Benutzergerät gesendeten Bestätigungsnachricht, wobei die Bestätigungsnachricht ein erstes Signaturtoken befördert, das von dem Benutzergerät gemäß einer ersten mobilen Teilnehmerkennung mit verbessertem Datenschutz, PMSI, erzeugt wird;
Verifizieren (S404), ob das erste Signaturtoken gültig ist, durch ein Verifizierungsmodul (74); und
wenn das erste Signaturtoken ungültig ist, Gewinnen (S406) der ersten PMSI oder einer zweiten PSMI, die gemäß der ersten PMSI erzeugt wird, durch ein erstes Gewinnungsmodul (76), um die Netzwerkzugriffauthentifizierung für das Benutzergerät durchzuführen.

2. Verfahren nach Anspruch 1, wobei das Gewinnen (S406) der ersten PMSI oder einer zweiten PMSI, die gemäß der ersten PMSI erzeugt wird, um die Netzwerkzugriffauthentifizierung für das Benutzergerät durchzuführen, aufweist:
Senden einer Nachricht, dass die Authentifizierung des ersten Signaturtokens fehlgeschlagen ist, an das Benutzergerät, und Benachrichtigen des Benutzergeräts, dass es erneut eine Anschlussanforderung einleiten soll; und
erneutes Gewinnen der ersten PMSI basierend auf der Anschlussanforderung, um die Netzwerkzugriffauthentifizierung für das Benutzergerät durchzuführen.

3. Verfahren nach Anspruch 1, wobei das Gewinnen (S406) der ersten PMSI oder einer zweiten PMSI, die gemäß der ersten PMSI erzeugt wird, um die Netzwerkzugriffauthentifizierung für das Benutzergerät durchzuführen, aufweist:
Erzeugen der zweiten PMSI gemäß der ersten PMSI und Senden der zweiten PMSI an das Benutzergerät;
basierend auf einer Rückmeldung von dem Benutzergerät Gewinnen eines zweiten Signaturtokens, das von dem Benutzergerät gemäß der zweiten PMSI erzeugt wird; und
erneutes Durchführen der Netzwerkzugriffauthentifizierung für das Benutzergerät über die Verifizierung, ob das zweite Signaturtoken gültig ist.

4. Verfahren nach Anspruch 3, wobei das erneute Durchführen der Netzwerkzugriffauthentifizierung für das Benutzergerät über die Verifizierung, ob das zweite Signaturtoken gültig ist, aufweist;
Verifizieren, ob das zweite Signaturtoken gültig ist;
wenn das zweite Signaturtoken ungültig ist, Senden einer Nachricht, dass die Authentifizierung des zweiten Signaturtokens fehlgeschlagen ist, an das Benutzergerät, und Benachrichtigen des Benutzergeräts, dass das zweite Signaturtoken ungültig ist; und
wenn das zweite Signaturtoken gültig ist, Durchführen der Anschlussverarbeitung für das Benutzergerät unter Verwendung der zweiten PMSI anstelle der ersten PMSI.

5. Verfahren nach Anspruch 1, wobei das Verfahren vor dem Empfangen (S402) der von dem Benutzergerät gesendeten Bestätigungsnachricht ferner aufweist:
Empfangen einer von dem Benutzergerät gesendeten Anschlussanforderung, wobei die Anschlussanforderung die erste PMSI befördert und die erste PMSI eine Benutzerdatenzentrumskennung aufweist;
Erzeugen einer verschlüsselten ersten PMSI durch ein Benutzerdatenzentrum, das der Benutzerdatenzentrumskennung entspricht; und
Senden der verschlüsselten ersten PMSI an das Benutzergerät, wobei die verschlüsselte erste PMSI verwendet wird, um das erste Signaturtoken zu erzeugen.

6. Verfahren nach Anspruch 1, wobei das Verfahren vor dem Empfangen (S402) der von dem Benutzergerät gesendeten Bestätigungsnachricht ferner aufweist:
Gewinnen der ersten PMSI durch ein zweites Gewinnungsmodul (92) mittels Hashing einer internationalen mobilen Teilnehmeridentifikationsnummer (IMSI) unter Verwendung einer Hash-Funktion.

7. Verfahren nach einem der Ansprüche 1 bis 6, wobei das Empfangen (S402) der von dem Benutzergerät gesendete Bestätigungsnachricht aufweist:
Empfangen einer von einem Dienstnetzwerk gesendeten Standortaktualisierungsanforderung, wobei die Standortaktualisierungsanforderung das erste Signaturtoken befördert, das von dem Benutzergerät an das Dienstnetzwerk weitergeleitet wird.

8. Netzwerkzugriff-Authentifizierungsverarbeitungsvorrichtung, die aufweist:
ein erstes Empfangsmodul (72), das konfiguriert ist, um eine von einem Benutzergerät gesendete Bestätigungsnachricht zu empfangen, wobei die Bestätigungsnachricht ein erstes Signaturtoken befördert, das von dem Benutzergerät gemäß einer ersten mobilen Teilnehmerkennung mit verbessertem Datenschutz, PMSI, erzeugt wird;
ein Verifizierungsmodul (74), das konfiguriert ist, um zu verifizieren, ob das erste Signaturtoken gültig ist; und
ein erstes Gewinnungsmodul (76), das konfiguriert ist, um, wenn das erste Signaturtoken ungültig ist, die erste PMSI oder eine zweite PSMI, die gemäß der ersten PMSI erzeugt wird, zu gewinnen, um die Netzwerkzugriffauthentifizierung für das Benutzergerät durchzuführen.

9. Vorrichtung nach Anspruch 8, wobei das erste Gewinnungsmodul (76) ferner konfiguriert ist, um eine Nachricht, dass die Authentifizierung des ersten Signaturtokens fehlgeschlagen ist, an das Benutzergerät zu senden und das Benutzergerät zu benachrichtigen, dass es erneut eine Anschlussanforderung einleiten soll; und um die erste PMSI zu gewinnen, basierend auf der Anschlussanforderung , um die Netzwerkzugriffauthentifizierung für das Benutzergerät durchzuführen.

10. Vorrichtung nach Anspruch 8, wobei das erste Gewinnungsmodul (76) ferner konfiguriert ist, um die zweite PMSI gemäß der ersten PMSI zu erzeugen und die zweite PMSI an das Benutzergerät zu senden; basierend auf einer Rückmeldung von dem Benutzergerät ein zweites Signaturtoken, das von dem Benutzergerät gemäß der zweiten PMSI erzeugt wird, zu gewinnen; und die Netzwerkzugriffauthentifizierung für das Benutzergerät über die Verifizierung, ob das zweite Signaturtoken gültig ist, erneut durchzuführen.

11. Vorrichtung nach Anspruch 10, wobei das erste Gewinnungsmodul (76) ferner konfiguriert ist, um zu verifizieren, ob das zweite Signaturtoken gültig ist; wenn das zweite Signaturtoken ungültig ist, eine Nachricht, dass die Authentifizierung des zweiten Signaturtokens fehlgeschlagen ist, an das Benutzergerät und ein Dienstnetzwerk zu senden, und das Benutzergerät zu benachrichtigen, dass das zweite Signaturtoken ungültig ist; und wenn das zweite Signaturtoken gültig ist, die Anschlussverarbeitung für das Benutzergerät unter Verwendung der zweiten PMSI anstelle der ersten PMSI durchzuführen.

12. Vorrichtung nach Anspruch 8, die ferner aufweist:
ein zweites Empfangsmodul (82), das konfiguriert ist, um eine von dem Benutzergerät gesendete Anschlussanforderung zu empfangen, wobei die Anschlussanforderung die erste PMSI befördert und die erste PMSI eine Benutzerdatenzentrumskennung aufweist, wobei die Benutzerdatenzentrumskennung einem Benutzerdatenzentrum entspricht, wobei das Benutzerdatenzentrum ein zweites Erzeugungsmodul (84) umfasst, das konfiguriert ist, um eine verschlüsselte erste PMSI zu erzeugen; und
ein Sendemodul (86), das konfiguriert ist, um eine verschlüsselte erste PMSI an das Benutzergerät zu senden, wobei die verschlüsselte erste PMSI verwendet wird, um das erste Signaturtoken zu erzeugen.

13. Vorrichtung nach Anspruch 8, die ferner aufweist:
ein zweites Gewinnungsmodul (92), das konfiguriert ist, um die erste PMSI mittels Hashing einer internationalen mobilen Teilnehmeridentifikationsnummer (IMSI) unter Verwendung einer Hash-Funktion zu gewinnen.

14. Vorrichtung nach einem der Ansprüche 8 bis 13, wobei das erste Empfangsmodul (72) ferner konfiguriert ist, um eine von einem Dienstnetzwerk gesendete Standortaktualisierungsanforderung zu empfangen, wobei die Standortaktualisierungsanforderung das erste Signaturtoken befördert, das von dem Benutzergerät an das Dienstnetzwerk weitergeleitet wird.

15. Speichermedium, das ein gespeichertes Programm aufweist, wobei das Programm das Verfahren nach einem der Ansprüche 1 bis 7 ausführt, während es auf einem Computer läuft.

## Revendications

1. Procédé de traitement d'authentification d'accès au réseau, comprenant :
la réception (S402) par un premier module de réception (72) d'un message de confirmation envoyé par un équipement d'utilisateur, ledit message de confirmation transmettant un premier jeton de signature généré par l'équipement d'utilisateur conformément à une première identification d'abonné mobile à protection de données améliorée, PMSI ;
la vérification (S404) de la validité du premier jeton de signature par un module de vérification (74) ; et
si le premier jeton de signature est invalide, l'acquisition (S406) de la première PMSI ou d'une deuxième PSMI générée conformément à la première PMSI par un premier module d'acquisition (76), afin d'effectuer l'authentification d'accès au réseau pour l'équipement d'utilisateur.

2. Procédé selon la revendication 1, où l'acquisition (S406) de la première PMSI ou d'une deuxième PMSI générée conformément à la première PMSI, afin d'effectuer l'authentification d'accès au réseau pour l'équipement d'utilisateur, comprend :
l'envoi d'un message selon lequel l'authentification du premier jeton de signature a échoué à l'équipement d'utilisateur, et la notification à l'équipement d'utilisateur qu'il a à initialiser une nouvelle demande de connexion ; et
une nouvelle acquisition de la première PMSI sur la base de la demande de connexion, afin d'effectuer l'authentification d'accès au réseau pour l'équipement d'utilisateur.

3. Procédé selon la revendication 1, où l'acquisition (S406) de la première PMSI ou d'une deuxième PMSI générée conformément à la première PMSI, afin d'effectuer l'authentification d'accès au réseau pour l'équipement d'utilisateur, comprend :
la génération de la deuxième PMSI conformément à la première PMSI et l'envoi de la deuxième PMSI à l'équipement d'utilisateur ;
sur la base d'une réponse de l'équipement d'utilisateur, l'acquisition d'un deuxième jeton de signature généré par l'équipement d'utilisateur conformément à la deuxième PMSI ; et
une nouvelle exécution de l'authentification d'accès au réseau pour l'équipement d'utilisateur par vérification si le deuxième jeton de signature est valide.

4. Procédé selon la revendication 3, où la nouvelle exécution de l'authentification d'accès au réseau pour l'équipement d'utilisateur par vérification si le deuxième jeton de signature est valide comprend ;
la vérification si le deuxième jeton de signature est valide;
si le deuxième jeton de signature est invalide, l'envoi à l'équipement d'utilisateur d'un message selon lequel l'authentification du deuxième jeton de signature a échoué, et la notification à l'équipement d'utilisateur que le deuxième jeton de signature est invalide ; et
si le deuxième jeton de signature est valide, l'exécution d'un traitement de connexion pour l'équipement d'utilisateur en recourant à la deuxième PMSI au lieu de la première PMSI.

5. Procédé selon la revendication 1, où ledit procédé comprend en outre, avant la réception (S402) du message de confirmation envoyé par l'équipement d'utilisateur :
la réception d'une demande de connexion adressée par l'équipement d'utilisateur, ladite demande de connexion transmettant la première PMSI et la première PMSI contenant une identification de centre de données d'utilisateur ;
la génération d'une première PMSI cryptée par un centre de données d'utilisateur, correspondant à l'identification de centre de données d'utilisateur ; et
l'envoi de la première PMSI cryptée à l'équipement d'utilisateur, ladite première PMSI cryptée étant utilisée pour générer le premier jeton de signature.

6. Procédé selon la revendication 1, où ledit procédé comprend en outre, avant la réception (S402) du message de confirmation envoyé par l'équipement d'utilisateur :
l'acquisition de la première PMSI par un deuxième module d'acquisition (92) par hachage d'un numéro d'identité internationale d'abonné mobile (IMSI) au moyen d'une fonction de hachage.

7. Procédé selon l'une des revendications 1 à 6, où la réception (S402) du message de confirmation envoyé par l'équipement d'utilisateur comprend :
la réception d'une demande d'actualisation de site adressée par un réseau de services, ladite demande d'actualisation de site contenant le premier jeton de signature transmis par l'équipement d'utilisateur au réseau de services.

8. Dispositif de traitement d'authentification d'accès au réseau, comprenant :
un premier module de réception (72) configuré pour recevoir un message de confirmation envoyé par un équipement d'utilisateur, ledit message de confirmation transmettant un premier jeton de signature généré par l'équipement d'utilisateur conformément à une première identification d'abonné mobile à protection de données améliorée, PMSI ;
un module de vérification (74) configuré pour vérifier si le premier jeton de signature est valide ; et
un premier module d'acquisition (76) configuré pour acquérir, si le premier jeton de signature est invalide, la première PMSI ou une deuxième PSMI générée conformément à la première PMSI, afin d'effectuer l'authentification d'accès au réseau pour l'équipement d'utilisateur.

9. Dispositif selon la revendication 8, où le premier module d'acquisition (76) est en outre configuré pour envoyer à l'équipement d'utilisateur un message selon lequel l'authentification du premier jeton de signature a échoué, et notifier à l'équipement d'utilisateur qu'il a à initialiser une nouvelle demande de connexion ; et pour acquérir la première PMSI sur la base de la demande de connexion, afin d'effectuer l'authentification d'accès au réseau pour l'équipement d'utilisateur.

10. Dispositif selon la revendication 8, où le premier module d'acquisition (76) est en outre configuré pour générer la deuxième PMSI conformément à la première PMSI et pour envoyer la deuxième PMSI à l'équipement d'utilisateur ; pour acquérir, sur la base d'une réponse de l'équipement d'utilisateur, un deuxième jeton de signature généré par l'équipement d'utilisateur conformément à la deuxième PMSI ; et pour effectuer une nouvelle authentification d'accès au réseau pour l'équipement d'utilisateur par vérification si le deuxième jeton de signature est valide.

11. Dispositif selon la revendication 10, où le premier module d'acquisition (76) est en outre configuré pour vérifier si le deuxième jeton de signature est valide ; pour adresser, si le deuxième jeton de signature est invalide, un message selon lequel l'authentification du deuxième jeton de signature a échoué, à l'équipement d'utilisateur et à un réseau de services, et notifier à l'équipement d'utilisateur que le deuxième jeton de signature est invalide ; et si le deuxième jeton de signature est valide, exécuter le traitement de connexion pour l'équipement d'utilisateur en recourant à la deuxième PMSI au lieu de la première PMSI.

12. Dispositif selon la revendication 8, comprenant en outre :
un deuxième module de réception (82), configuré pour recevoir une demande de connexion adressée par l'équipement d'utilisateur, ladite demande de connexion transmettant la première PMSI et la première PMSI contenant une identification de centre de données d'utilisateur, l'identification de centre de données d'utilisateur correspondant à un centre de données d'utilisateur, ledit centre de données d'utilisateur comprenant un deuxième module de génération (84), configuré pour générer une première PMSI cryptée ; et
un module d'envoi (86), configuré pour adresser une première PMSI cryptée à l'équipement d'utilisateur, ladite première PMSI cryptée étant utilisée pour générer le premier jeton de signature.

13. Dispositif selon la revendication 8, comprenant en outre :
un deuxième module d'acquisition (92), configuré pour acquérir la première PMSI par hachage d'un numéro d'identité internationale d'abonné mobile (IMSI) au moyen d'une fonction de hachage.

14. Dispositif selon l'une des revendications 8 à 13, où le premier module de réception (72) est en outre configuré pour recevoir une demande d'actualisation de site adressée par un réseau de services, ladite demande d'actualisation de site contenant le premier jeton de signature transmis par l'équipement d'utilisateur au réseau de services.

15. Support d'enregistrement contenant un programme enregistré, le programme exécutant le procédé selon l'une des revendications 1 à 7 une fois lancé sur un ordinateur.
